Europäisches Patentamt

European Patent Office

Office européen des brevets

(19)

(11) Veröffentlichungsnummer : **0 121 843**
**B1**

(12) **EUROPÄISCHE PATENTSCHRIFT**

(45) Veröffentlichungstag der Patentschrift :
23.12.87

(51) Int. Cl.⁴ : **B 25 J 17/02**

(21) Anmeldenummer : 84103245.1

(22) Anmeldetag : 23.03.84

(54) Robotergelenk.

(30) Priorität : 06.04.83 DE 3312404

(43) Veröffentlichungstag der Anmeldung :
17.10.84 Patentblatt 84/42

(45) Bekanntmachung des Hinweises auf die Patenterteilung : 23.12.87 Patentblatt 87/52

(84) Benannte Vertragsstaaten :
AT BE CH DE FR GB IT LI SE

(56) Entgegenhaltungen :
EP-A- 0 000 877
DE-A- 1 931 817
DE-A- 2 228 598
DE-A- 2 301 423
DE-A- 2 537 800
US-A- 3 893 573
US-A- 4 073 201

(73) Patentinhaber : **Manutec Gesellschaft für Automatisierungs- und Handhabungssysteme mbH**
**Gründlacher Strasse 248**
**D-8510 Fürth (DE)**

(72) Erfinder : **Eberle, Manfred**
**Würzburger Ring 70**
**D-8520 Erlangen (DE)**
Erfinder : **Kleemann, Robert**
**Volckamer Strasse 9**
**D-8520 Erlangen (DE)**

(74) Vertreter : **Mehl, Ernst, Dipl.-Ing. et al**
**Postfach 22 01 76**
**D-8000 München 22 (DE)**

## Beschreibung

Die Erfindung bezieht sich auf ein Robotergelenk mit im Gehäuse eingebautem elektrischen Antriebsmotor und Untersetzungsgetriebe, bei dem

a) Motor und Untersetzungsgetriebe in Längsrichtung hintereinanderliegen und in einem ersten rohrförmigen Drehteil eingesetzt sind, das mit einem vorhergehenden Roboterteil verbindbar ist,

b) ein zweites rohrförmiges Drehteil über Lager am ersten Drehteil geführt und mit dem nachfolgenden Roboterteil verbindbar ist,

c) die abtreibende Seite des Untersetzungsgetriebes über einen Kuppelteil mechanisch mit dem zweiten Drehteil verbunden ist, und

d) nach Lösen von gehäuseseitigen Schraubverbindungen das Gelenk axial auseinanderziehbar ist.

Eine solche Anordnung ist beispielsweise aus der GB-A-1 511 609 und in ähnlicher Form aus der US-A-3 893 573 bekannt. Diese bekannten Konstruktionen bauen relativ lang, was insbesondere stören kann, wenn weitere Gelenke dicht dahinter folgen.

Industrieroboter sollen modular in Form eines Baukastensystems zusammensetzbar sein, wenig Platz benötigen und günstig für Montage und Wartung sein. Ferner wird eine hohe Verfahrgeschwindigkeit und Positioniergenauigkeit gefordert.

Die Aufgabe der vorliegenden Erfindung besteht darin, ein Robotergelenk im Rahmen eines derartigen modularen Baukastensystems für einen Industrieroboter zu schaffen, das besonders kompakt und gedrungen aufgebaut ist.

Diese Aufgabe wird erfindungsgemäß durch folgende Merkmale gelöst :

e) das erste Drehteil bildet gleichzeitig das Motorgehäuse,

f) das zweite Drehteil ist koaxial über beabstandete Lager auf dem ersten Drehteil geführt und

g) als Kuppelteil dient ein das erste Drehteil stirnseitig übergreifender Flansch des zweiten Drehteils.

Auf diese Weise werden Gewicht und Platz gespart und gleichzeitig dafür gesorgt, daß große Biegemomente aufgenommen werden können.

Im Rahmen eines Ellenbogengelenks können die rohrförmigen Drehteile zumindest teilweise durch Armendteile gebildet sein. Vorteilhafterweise sind dann beide Drehteile sowohl axial als auch radial gegeneinander gelagert.

Eine konstruktive besonders günstige Ausführungsform ist dabei durch folgende Merkmale gekennzeichnet :

a) Motor und Getriebe sind im Endteil des Oberarmes angeordnet und über einen Mitnehmer und einen Kuppelteil mit dem Unterarm gekuppelt ;

b) der Mitnehmer ist radial über ein Lager an einem zentrischen, am Endteil des Oberarms angeordneten Tragrohr abgestützt ;

c) zwischen dem Endteil des Oberarms und des Unterarms ist ein Axiallager angeordnet, und

d) die Lager stehen unter Federvorspannung.

Als elektrische Antriebsmotoren werden mit Vorteil Drehstrommotoren mit Permanenterregung verwendet. Diese Drehstrommotoren tragen auf der dem Untersetzungsgetriebe abgewandten Seite gleichzeitig auch auf der Welle einen Weggeber für die Lageregelung.

Anhand eines in der Zeichnung dargestellten Ausführungsbeispiels sei die Erfindung näher beschrieben ; es zeigen :

Figur 1 eine Seitenansicht eines Industriegelenkroboters,

Figur 2 eine Draufsicht auf den Roboter nach Figur 1,

Figuren 3 und 4 Längsschnitte durch Gelenke zwischen Ständer und Oberarm,

Figur 5 einen Schnitt durch das Gelenk zwischen Ober- und Unterarm, und

Figur 6 einen Längsschnitt durch drei aneinandergesteckte Gelenke zwischen Unterarm und Greifer.

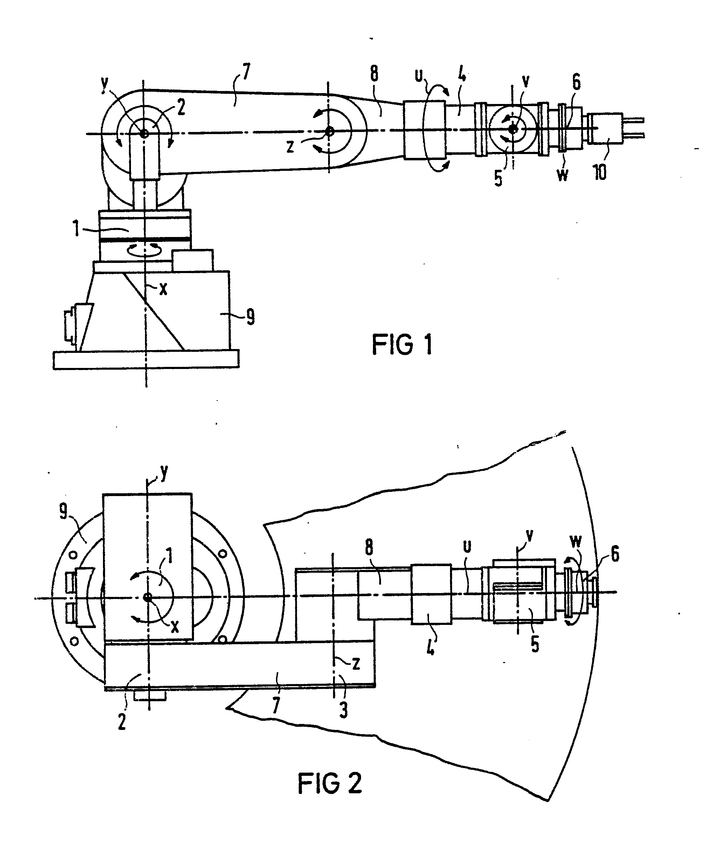

Bei dem in Figur 1 und 2 schematisch dargestellten Industrie-Gelenkroboter sitzt auf einem Ständersockel 9 das Gelenk 1 (Rumpfgelenk), durch das eine Drehung um die x-Achse in einem Bereich von z. B. 400° möglich ist. Mit diesem Gelenk 1 ist ein Gelenk 2 (Schultergelenk) verschraubt, durch das eine Drehung um die senkrecht zur x-Achse liegende y-Achse in einem Bereich von z. B. 250° möglich ist.

An diesem Gelenk 2 ist seitlich der Oberarm 7 befestigt. Dieser trägt am anderen Ende das Gelenk 3, durch das eine Drehung von z. B. 320° um die senkrecht zur Armlängsrichtung liegende z-Achse möglich ist. Die z-Achse und y-Achse liegen dabei parallel zueinander.

Am Gelenk 3 ist der parallel zum Oberarm 7 geführte Vorderarm 8 befestigt. An diesen Vorderarm schließen sich drei Gelenke 4, 5 und 6 an, die zur Drehung um 300°, 180° und 540° in den Drehachsen u, v und w dienen.

Am Gelenk 6 ist der eigentliche Greifer 10 (Hand) befestigbar.

Wie ersichtlich, liegen jeweils die Achsen x, u und w in der gleichen Ebene, während die Achsen y und z parallel zueinander sind.

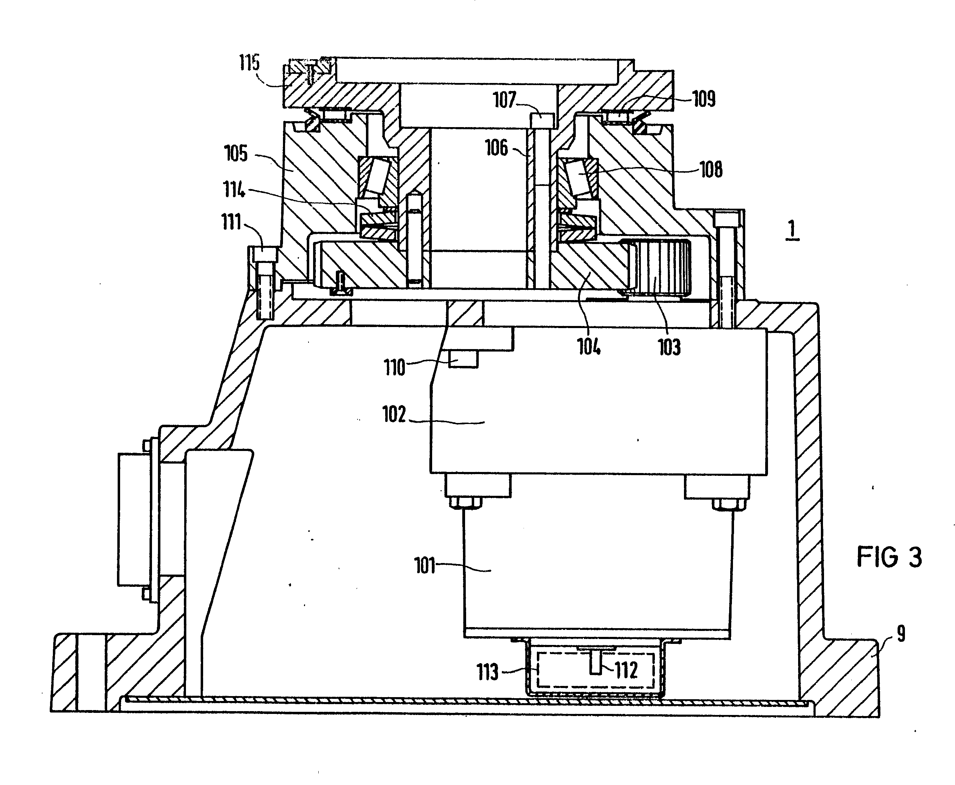

Figur 3 zeigt einen Schnitt durch das Gelenk 1 mit Sockel 9. Wie ersichtlich, ist der im Sockelinnern angeordnete elektrische Antriebsmotor 101 samt Untersetzungsgetriebe 102 mittels Schraubverbindungen 110 mit dem Sockel verschraubt. Auf das Wellenende 112 des Motors 101 ist noch ein gestrichelt angedeuteter Weggeber 113 aufsteckbar. Der Antriebsmotor 101 ist ein Drehstrommotor mit Permanenterregung und relativ niedrigem Trägheitsmoment.

Das Abtriebsritzel 103 des Getriebes 102 greift in ein Zahnrad 104 ein. Dieses Zahnrad 104 ist über Schraubverbindungen 107 mit einem koaxialen Anbauflansch 106 fest verbunden. Der als Drehteil ausgebildete Anbauflansch 106 und das Zahnrad 104 sind im Lagergehäuse 105, das einen Teil des Gelenkgehäuses bildet, axial und radial geführt, und zwar axial über das Nadellager 109 und axial und radial über ein Kegelrollenlager 108. Die Lager 108 und 109 stehen dabei durch eine Feder 114 unter Vorspannung. Das Lager 108 wird unmittelbar durch die Feder 114 vorgespannt und das Lager 109 über Zahnrad 104 und Anbauflansch 106. Da der Anbauflansch 106 fest am Lagergehäuse auf einem Nadellagerkranz von nahezu Gelenkdurchmesser geführt ist, läßt sich in Verbindung mit dem Kegelrollenlager eine weitgehende Spielfreiheit erreichen.

Nach Lösen der Schraubverbindungen 111 können das Lagergehäuse 105 und die mit ihm verbundenen Teile vom Ständersockel 9 abgehoben werden.

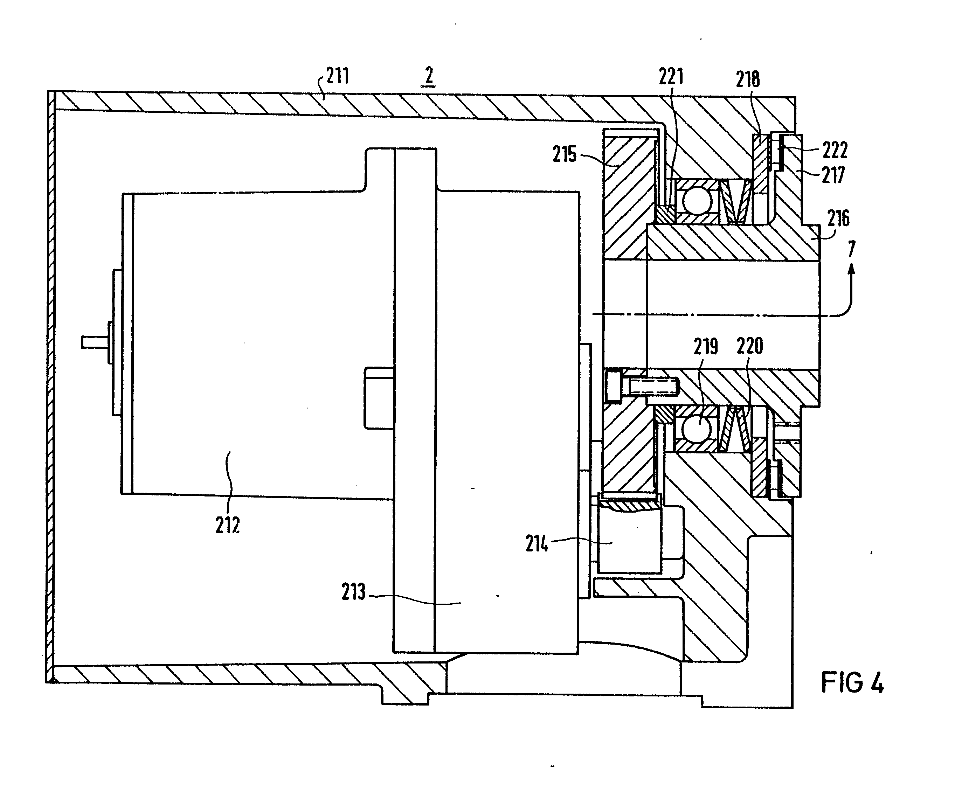

Der Anbauflansch 106 des Gelenkes 1 ist an seiner Schulter 115 mit dem in Figur 4 gezeigten Gelenk 2 verschraubbar und mit dem rohrförmigen Gehäuse 211 des Gelenks 2.

Der im Gelenk 2 eingebaute elektrische Antriebsmotor 212 treibt über ein Untersetzungsgetriebe 213 ein Ritzel 214, das in ein Zahnrad 215 eingreift. Dieses Zahnrad 215 ist mit einem koaxialen Flansch 216 verschraubt. Die Ringschulter 217 dieses Flansches 216 ist über ein Nadellager 222 auf einem mit dem Gelenkgehäuse verschraubten Druckring 218 axial geführt. Zur radialen Führung des Flansches 216 dient ein Kugellager 219, das durch eine sich am Druckring 218 abstützende Feder 220 vorgespannt ist. Gleichzeitig steht hierdurch über Ring 221, Zahnrad 215 und Flansch 216 auch das Lager 222 unter Vorspannung, so daß eine straffe Lagerung gesichert ist.

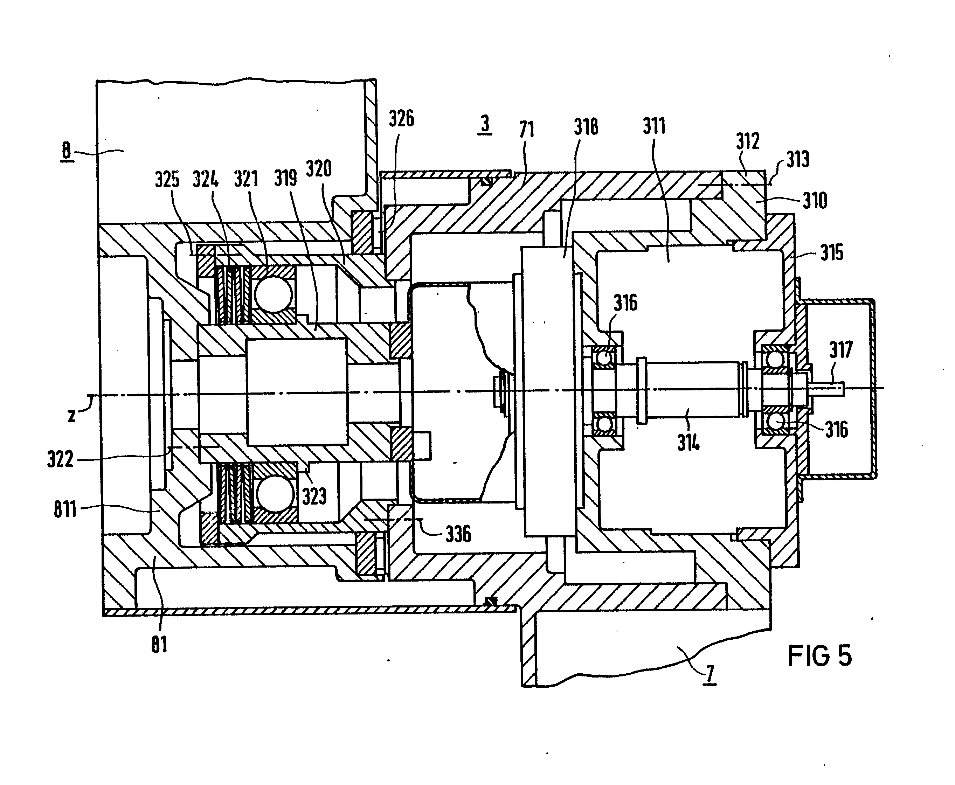

Figur 5 zeigt das Gelenk 3 zwischen Oberarm 7 und Vorderarm 8 zur Drehung um die z-Achse. Das Gelenkgehäuse wird im wesentlichen durch zwei zentrisch aneinandergrenzende, rohrförmige Endteile 71 und 81 des Oberarms 7 und des Vorderarms 8 gebildet.

Im Endteil 71 ist das Gehäuse 310 des elektrischen Antriebsmotors 311 bis zur Ringschulter 312 eingeschoben und hier über angedeutete Schraubverbindungen 313 mit dem Teil 71 verschraubt.

Die Welle 314 des Motors 311 ist in einem im Gehäuse 310 und einem im Lagerdeckel 315 angeordneten Kugellager 316 geführt. Die Welle 314 ist an einem Ende 317 mit Aufnahmegewinden für nicht dargestellte Weg- bzw. Drehzahlgeber versehen und trägt am anderen Ende koaxial ein Untersetzungsgetriebe 318 (Harmonic Drive). An das Untersetzungsgetriebe 318 ist ein vom Teil 81 koaxial umfaßter, in der Wellenlängenachse liegender zylindrischer Mitnehmer 319 angeschraubt, der in einem am Teil 71 befestigten koaxialen Tragrohr 320 mittels eines mittig zum Vorderarm liegenden Kugellagers 321 geführt ist. Das an einer umlaufende Schulter 323 des Mitnehmers 319 anliegende Kugellager 321 steht dabei unter der Vorspannung einer Druckfeder 324, die sich an dem mit dem Tragrohr 320 verschraubten Druckring 325 abstützt.

Das Ende des Mitnehmers 319 ist mit dem Kupplungsteil 811 des Endteils 81 des Vorderarms 8 über angedeutete Schraubverbindungen 322 verbunden.

Zusätzlich ist der Vorderarm 8 noch durch ein Axiallager 326 geführt, das zwischen den aneinandergrenzenden Ringflächen der Teile 71 und 81 angeordnet ist und ebenfalls unter der kompensierenden Vorspannung der Feder 324 steht.

Der Unterarm 8 kann nach Lösen der Schraubverbindungen 336 vom Gelenk 3 gelöst werden.

Motor 312, Getriebe 318 und Mitnehmer 319 können nach Lösen der gestrichelt angedeuteten Schraubverbindungen 313 aus dem Teil 71 herausgezogen werden.

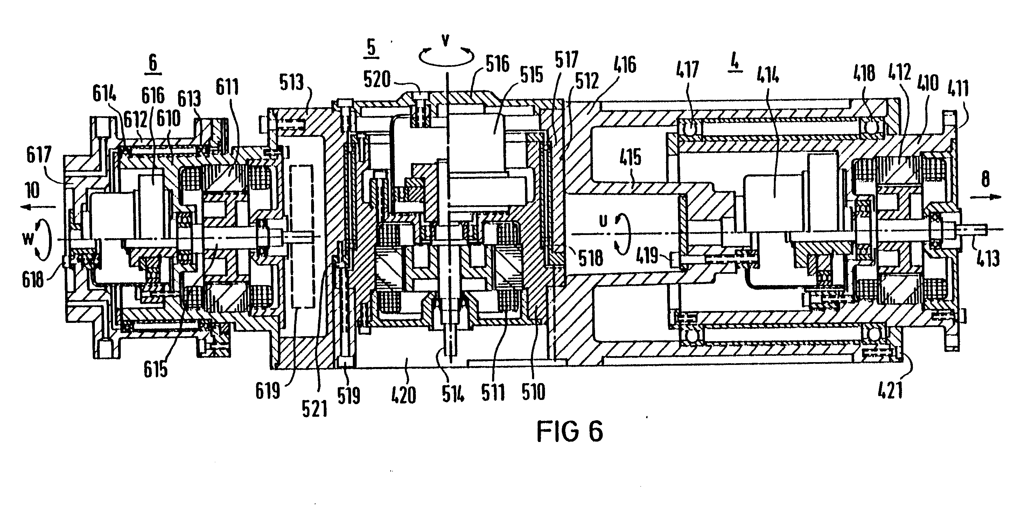

Figur 6 zeigt die drei aneinandergesteckten Gelenke 4 bis 6 Zwischen Unterarm 8 und Greifer 10, mit denen Drehungen um die Achsen u, v und w möglich sind.

Wie ersichtlich, besteht das Gelenk 4 aus einem rohrförmigen Innenteil 410 (Drehteil), das über einen Flansch 411 mit dem Vorderarm 8 verschraubbar ist. Das Innenteil 410 bildet gleichzeitig das Gehäuse des elektrischen Antriebsmotors 412. Dieser ist ein Drehstrommotor mit Permanenterregung und niedrigem Trägheitsmoment und ist zunächst dem Gelenk 3 angeordnet, so daß seine Massen hinsichtlich einer Biegebeanspruchung möglichst wenig zur Geltung kommen.

Die Welle 413 des Motors 412 treibt ein koaxial an den Motor anschließendes, am Innenteil befestigtes Untersetzungsgetriebe 414 (Harmonic Drive), dessen abtreibender Teil mit dem Flansch 415 des rohrförmigen, das Innenteil 410 koaxial umgebenden rohrförmigen Außenteils 416 (Drehteil) verschraubt ist. Das Außenteil 416 ist dabei über zwei auf Abstand gehaltene Kugellager 417 und 418 am Innenteil 410 geführt. Der Abstand der beiden Kugellager 417 und 418 ist so gewählt, daß möglichst hohe Momente gut aufgenommen werden können.

Nach Lösen der angedeuteten Schraubverbindungen 419 und 421 kann das Innenteil samt Motor 412 und Getriebe 414 aus dem Außenteil 416 herausgezogen werden.

Der Außenteil 416 hat ein angesetztes Tragteil 420, in dem das Gelenk 5 sitzt.

Das Gelenk 5 besteht ebenfalls aus einem rohrförmigen, mit dem seitlichen Tragteil 420 verschraubten Innenteil 510, das gleichzeitig das Gehäuse des elektrischen Antriebsmotors 511 bildet und einen das Innenteil 510 koaxial umgebenden rohrförmigen Außenteil 512 mit einem senkrecht angesetzten, ebenfalls rohrförmigen Anbauträgerteil 513. Die Motorwelle 514 ist über das angebaute Untersetzungsgetriebe 515 und einen damit abtriebsseitig verbundenen Lagerdeckel 516 mit dem Außenteil 512 gekuppelt.

Innenteil 510 und Außenteil 512 sind ebenfalls wieder über Kugellager 517 und 518 gegeneinander abgestützt. Nach Lösen der angedeuteten Schraubverbindungen 519 kann das Gelenk 5 aus dem Gelenk 4 herausgezogen werden.

Nach Lösen der Schraubverbindungen 520 und 521 kann das Innenteil 510 samt Motor und Getriebe aus dem Außenteil 512 herausgezogen werden.

Das Gelenk 6 besteht aus dem mit dem Anbauträgerteil 513 des Gelenkes verschraubbaren rohrförmigen Innenteil 610, das ebenfalls gleichzeitig das Gehäuse des elektrischen Antriebsmotors 611 bildet, und aus einem dieses Innenteil koaxial umgebenden rohrförmigen Außenteil 612, der über auf Abstand gehaltene Kugellager 613 und 614 am Innenteil abgestützt ist. Die Antriebsverbindung zwischen Motorwelle 615 und Außenteil 612 läuft über das koaxial angebaute Untersetzungsgetriebe 616, mit dessen abtreibenden Teil der Kupplungsflansch 617 des Außenteils 612 verschraubt ist. Nach Lösen der Schraubverbindungen 618 kann das Innenteil 610 mit Motor und Getriebe aus dem Außenteil 612 herausgezogen werden.

Wie gestrichelt angedeutet, ist hierbei, wie auch bei allen anderen Gelenken, auf der dem Getriebe abgewandten Seite der Motorwelle 615 ein Weggeber 619 angeordnet.

Die vorstehend beschriebene Konstruktion zeichnet sich durch einen platzsparenden Aufbau, hohe Wartungsfreundlichkeit und hohe Positioniergenauigkeit aus.

## Patentansprüche

1. Robotergelenk mit im Gehäuse eingebautem elektrischen Antriebsmotor und Untersetzungsgetriebe, bei dem
   a) Motor (412) und Untersetzungsgetriebe (414) in Längsrichtung hintereinanderliegen und in einem ersten rohrförmigen Drehteil (410) eingesetzt sind, das mit einem vorhergehenden Roboterteil (8) verbindbar ist,
   b) ein zweites rohrförmiges Drehteil (416) über Lager (417, 418) am ersten Drehteil (410) geführt und mit dem nachfolgenden Roboterteil (5) verbindbar ist,
   c) die abtreibende Seite des Untersetzungsgetriebes (414) über einen Kuppelteil (415) mechanisch mit dem zweiten Drehteil (416) verbunden ist, und
   d) nach Lösen von gehäuseseitigen Schraubverbindungen (419, 421) das Gelenk axial auseinanderziehbar ist, gekennzeichnet durch folgende Merkmale :
   e) das erste Drehteil (410) bildet gleichzeitig das Motorgehäuse,
   f) das zweite Drehteil (416) ist koaxial über beabstandete Lager (417, 418) auf dem ersten Drehteil (410) geführt und
   g) als Kuppelteil dient ein das erste Drehteil (410) stirnseitig übergreifender Flansch (415) des zweiten Drehteils (416).

2. Robotergelenk nach Anspruch 1, dadurch gekennzeichnet, daß die rohrförmigen Drehteile zumindest teilweise durch Armendteile (71, 81) gebildet sind und beide Drehteile axial und radial gegeneinander gelagert sind.

3. Robotergelenk nach Anspruch 2, gekennzeichnet durch folgende Merkmale :
   a) Motor und Getriebe sind im Endteil (71) des Oberarms (7) angeordnet und über einen Mitnehmer (319) und ein Kuppelteil (811) mit dem Vorderarm (8) gekuppelt,
   b) der Mitnehmer (319) ist radial über ein Lager (321) an einem zentrisch am Endteil (71) des Oberarms (7) angeordneten Tragrohr (320) abgestützt,
   c) zwischen den Endteilen (71, 81) des Oberarmes (7) und des Unterarmes (8) ist ein Axiallager (326) angeordnet, und
   d) die Lager (321, 326) stehen unter Federvorspannung.

4. Robotergelenk nach Anspruch 1, dadurch gekennzeichnet, daß als elektrischer Antriebsmotor ein Drehstrommotor mit Permanenterregung dient, der auf der dem Untersetzungsgetriebe abgewandten Seite einen Weggeber (619) trägt.

## Claims

1. A robot joint comprising an electric drive motor and a reduction gear, installed in the housing, wherein
   a) motor (412) and reduction gear (414) are arranged in series in the longitudinal direction and are inserted in a first tubular rotating component (410) which can be connected to a preceding robot component (8),
   b) a second tubular rotating component (416) is mounted on the first rotating component (410) via bearings (417, 418) and can be connected to the following robot component (5),
   c) the driving side of the reduction gear (414) is mechanically connected via a coupling component (415) to the second rotating component (416) and
   d) following the release of the housing-side screw connections (419, 421) the joint can be axially dismantled, characterised by the following features :
   e) the first rotating component (410) simultaneously forms the motor housing,
   f) the second rotating component (416) is mounted coaxially on the first rotating component (410) via spaced bearings (417, 418),
   g) the coupling component consists of a flange (415) of the second rotating component (416) which engages over the first rotating component (410) at its end face.

2. A robot joint as claimed in claim 1, characterised in that the tubular rotating components are formed at least partially by arm end components (71, 81) and both rotating components are axially and radially fixed in relation to one another.

3. A robot joint as claimed in claim 2, characterised by the following features :
   a) the motor and gear train are arranged in the end component (71) of the upper arm (7) and are coupled to the fore-arm (8) via a carrier (319) and a coupling component (811),
   b) the carrier (319) is radially supported, via a bearing (321), on a supporting tube (320) which is arranged on the end component (71) of the upper arm (7),

c) an axial bearing (326) is arranged between the end components (71, 81) of the upper arm (7) and the lower arm (8) and

d) the bearings (321, 326) are subject to spring bias.

4. A robot joint as claimed in claim 1, character-ised in that the electric drive motor consists of a permanently excited three-phase motor which is provided with a position sensor (619) on the side facing away from the reduction gear.

## Revendications

1. Joint articulé pour robot, comportant un moteur d'entraînement électrique et un démultiplicateur, montés dans le carter, et dans lequel

a) un moteur (412) et un démultiplicateur (414) sont disposés l'un derrière l'autre dans la direction longitudinale et sont logés dans une première partie tournante tubulaire (410), qui peut être reliée à une partie (8) du robot, située en amont,

b) une seconde partie tournante tubulaire (416) est guidée au moyen de roulements (417, 418) dans la première partie tournante (410) et peut être reliée à la partie (5) du robot, située en aval,

c) le côté moteur du démultiplicateur (414) est relié mécaniquement par l'intermédiaire d'un organe de couplage (415), à la deuxième partie tournante (416), et

d) après desserrement des liaisons vissées (419, 421), situées du côté du carter, le joint articulé peut être déployé axialement,
caractérisé par les caractéristiques suivantes :

e) la première partie tournante (410) forme simultanément le carter du moteur,

f) la seconde partie (416) est guidée coaxiale-ment par l'intermédiaire de roulements distants (417, 418) dans la première partie tournante (410), et

g) en tant qu'organe de couplage, on utilise une bride (415), qui s'engage frontalement sur la première partie tournante (410), de la seconde partie tournante (416).

2. Joint articulé pour robot suivant la revendication 1, caractérisé par le fait que les parties tournantes tubulaires sont formées au moins en partie par des parties d'extrémité (71, 81) de bras et que les deux parties tournantes sont raccordées l'une à l'autre de manière à avoir des déplacements réciproques axiaux et radiaux.

3. Joint articulé pour robot suivant la revendication 2, caractérisé par les caractéristiques suivantes :

a) le moteur et le démultiplicateur sont disposés dans la partie d'extrémité (71) du bras supérieur (7) et sont accouplés à l'avant-bras (8) par l'intermédiaire d'un organe d'entraînement (319) et d'un organe d'accouplement (811),

b) l'organe d'entraînement (319) prend appui radialement, par l'intermédiaire d'un roulement (321) sur un tube de support (320) disposé en étant centré sur la partie d'extrémité (71) du bras supérieur (7),

c) un palier axial (326) est disposé entre les parties d'extrémité (71, 81) du bras supérieur (7) et du bras inférieur (8), et

d) le roulement (321) et le palier (326) sont placés sous la précontrainte d'un ressort.

4. Joint articulé pour robot suivant la revendication 1, caractérisé par le fait qu'on utilise comme moteur d'entraînement électrique, un moteur triphasé à excitation permanente, qui porte un capteur de distance (619) sur son côté situé à l'opposé du démultiplicateur.

FIG 1

FIG 2

1

FIG 3

FIG 4

211 2 221 218
215 222
217
216
7
219 220
214
212
213

0 121 843

FIG 5

0 121 843

FIG 6